# EUROPEAN PATENT SPECIFICATION

(11) **EP 2 381 122 B1**
(45) Date of publication and mention of the grant of the patent: **12.06.2013**
(21) Application number: 11162825.1
(22) Date of filing: 18.04.2011
(51) Int. Cl.: F16D 65/56, F16D 51/20

(54) **Automatic shoe clearance adjustment apparatus**
Vorrichtung zur automatischen Einstellung des Bremsbackenspiels
Dispositif d'ajustement automatique de jeu de mâchoire

(30) Priority: 23.04.2010 JP 2010100196
(43) Date of publication of application: 26.10.2011
(73) Proprietor: Nisshinbo Brake Inc., Chuo-ku Tokyo 103-8650 (JP)
(72) Inventor: Fujiyama, Masami, Oura-gun Gunma (JP)
(74) Representative: Isarpatent

(56) References cited:
- DE-A1- 10 121 968
- GB-A- 2 444 942
- US-A1- 2006 219 493

## Description

### CROSS-REFERENCE TO RELATED APPLICATION(S) AND CLAIM OF PRIORITY

The present application claims the benefit under the priority of Japanese Patent Application filed in the Japan Patent Office on April 23, 2010 and assigned serial number 2010-100196.

### FIELD OF THE INVENTION

This invention relates to a drum brake device and an incremental (a micro-adjustment) type automatic shoe clearance adjustment apparatus installed in a drum brake device.

### BACKGROUND OF THE INVENTION

An incremental type automatic shoe clearance adjustment apparatus is commonly known to automatically adjust a shoe clearance between a brake shoe and a brake drum, when the shoe clearance increases due to brake shoe lining wear, by co-operating a strut assembly, which is extending between a pair of brake shoes, and a driving member, which makes a ratchet engagement with adjustment teeth integrally formed on the strut assembly to rotate the adjustment teeth, to extend the entire length of the strut assembly.

The strut assembly includes a screw-engagement unit, having a bolt member with the adjustment teeth formed thereon and a nut member into which the bolt member is screwed, and a fitting member relatively-rotatably fitting on/in the screw engagement unit, where an end portion of the screw-engagement unit and an end portion of the fitting member, i.e., both ends of the strut assembly, engage the pair of brake shoes respectively. When assembling a drum brake device in which the incremental type automatic shoe clearance adjustment apparatus is installed, the strut assembly is temporarily set between the pair of brake shoes to make a semi-assembly first, and then the semi-assembly consisting of the brake shoes and the strut assembly are mounted on a backing plate. However, the semi-assembly of the brake shoes and the strut assembly is not stable for moving around. When assembling the automatic shoe clearance apparatus in the known drum brake device, in addition to a process of semi-assembling the pair of brake shoes and the strut assembly, an extremely difficult process of properly mounting the unstable semi-assembly of the brake shoes and the strut assembly is necessary while maintaining the semi-assembly, which makes the entire process more difficult and increases production cost.

The Patent Document 1 shows another type of drum brake device equipping the incremental type automatic shoe clearance adjustment apparatus where the strut assembly is installed after the pair of brake shoes are mounted on the backing plate. When installing the automatic shoe clearance adjustment apparatus in the drum brake device, one side of the strut assembly is set on one brake shoe as inclining the strut assembly relative to the backing plate, and then the strut assembly inclines back to level with the backing plate to superpose and set the other side of the strut assembly on the other brake shoe.

Also, in the drum brake device, a spring member fits over the other side of the strut assembly making a cantilever condition therebetween, and a top of the spring member engages a shoe web to restrict a free rotation of the strut assembly. Accordingly, when assembling this drum brake device, the strut assembly cannot easily be installed automatically, which leads to a problem of ineffective manual strut assembly operation. Furthermore, a brake lever is necessary for installing the strut assembly, and therefore this type is not suitable for a service brake excusive drum brake device, that is, one without the brake lever.

[Patent Document 1] Japanese Provisional Patent Publication No. 2003-522914 (US Provisional Patent Publication No. 2003/0070890)
A similar brake is also known from US-A-2006/0219 493.

### SUMMARY OF THE INVENTION

This invention is aimed to resolve the above-described problems, and an object of this invention is to provide a drum brake device comprising an incremental type automatic shoe clearance adjustment apparatus that enables an installation of a strut assembly while brake shoes are being mounted on a backing plate. Another object of this invention is to provide a drum brake device comprising an automatic shoe clearance adjustment apparatus that facilitates an automatic installation of the strut assembly. Another object of this invention is to provide a drum brake device comprising an automatic shoe clearance adjustment apparatus that can be used for a drum brake device without a brake lever.

This invention provides particular features in the drum brake device comprising the automatic shoe clearance adjustment apparatus that includes a semi-assembly having a backing plate, a pair of brake shoes mounted on the backing plate so as to face each other, a service brake actuator positioned between one facing ends of the pair of brake shoes, an anchor positioned between the other facing ends of the pair of brake shoes, and a shoe return spring urging the pair of brake shoes in a direction to approach each other so as to maintain both abutments between one facing ends of the brake shoes and the service brake actuator and between the other facing ends of the brake shoes and the anchor. This automatic shoe clearance adjustment apparatus has a strut assembly and a driving member, where the strut assembly includes a screw a screw-engagement unit, adjacent to one of the pair of brake shoes, which is consisting of a bolt member with the adjustment teeth formed thereon and a nut member into which the bolt member is screwed and a fitting member, adjacent to the other of the pair of brake shoes, relatively-rotatably fitting in the screw-engagement unit and the driving member engages adjustment teeth integrally formed on the screw engagement assembly of the strut assembly and rotates the adjustment teeth in one direction to extend the entire length of the strut assembly so as to automatically adjust a clearance between the brake shoes and a brake drum when the amount of brake shoe opening is more than a predetermined value. The strut assembly of said automatic shoe clearance adjustment apparatus is mountable between the pair of brake shoes of said semi-assembly when said strut assembly shifts, being parallel to the backing plate, in the direction towards the backing plates and said strut assembly is engageable with the brake shoes when the length of said strut assembly is extended.

Also, the drum brake device comprising the automatic shoe clearance adjustment apparatus according to the above-description has a feature that strut assembly is engageable with one of the brake shoes via a brake lever being provided on one of the brake shoes and operating by the parking brake.

Furthermore, the drum brake device comprising the automatic shoe clearance adjustment apparatus according to the above-description has a feature that a distance between the pair of brake shoes in an axial direction of the strut assembly is larger than a length from a first part of the strut assembly to a second part of the strut assembly at least when the length of the screw engagement unit of the strut assembly is shortest, where the first and second parts respectively define shoe-engagement portions of the strut assembly at both side thereof.

According to this invention, after the strut assembly makes a parallel movement toward the backing plate, a screw-engagement unit of the strut assembly can be extended to engage the pair of brake shoes, and therefore the strut assembly can be installed while the brake shoes are mounted on the backing plate. According to this invention, the strut assembly can be installed between the pair of brake shoes by simply extending the entire length of the screw-engagement unit, which facilitates an automatic installing process of the strut assembly. According to this invention, the automatic shoe clearance adjustment can be used for the service brake excusive drum brake device without the brake lever.

### BRIEF DESCRIPTION OF THE DRAWINGS

FIG. 1 is a plan view of the drum brake device equipped with the incremental type automatic shoe clearance adjustment apparatus of the first embodiment of this invention;

FIG. 2 is a cross sectional view of FIG. 1 taken along the line II-II;

FIG. 3 is a plan view of the drum brake device prior to the installation of the strut assembly;

FIG. 4 is a cross sectional view of the drum brake device prior to the completion of the installation of the strut assembly;

FIG. 5 is a cross sectional view of the drum brake device equipped with the incremental type automatic shoe clearance adjustment apparatus of the second embodiment of this invention;

FIG. 6 is a cross sectional view of the drum brake device prior to the completion of the installation of the strut assembly;

FIG. 7 is an enlarged view for explaining the dimensional relationship between an intermediate jaw section formed on a right side of the nut member of the strut assembly and an engagement hole of one brake shoe;

FIG. 8 is a cross sectional view of the drum brake device equipped with the incremental type automatic shoe clearance adjustment apparatus of the modified example of the first embodiment; and

FIG. 9 is a cross sectional view of the drum brake device equipped with the incremental type automatic shoe clearance adjustment apparatus of the modified example of the second embodiment.

### DETAILED DESCRIPTION OF THE PREFERRED EMBODIMENT

### <First Embodiment>

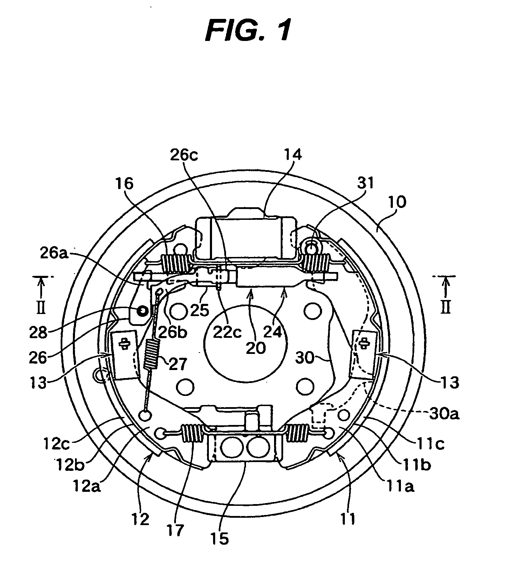

The first embodiment of this invention will be explained with reference to FIGS. 1-4 in the following paragraphs.

### <1> Overall Structure of Drum Brake Device

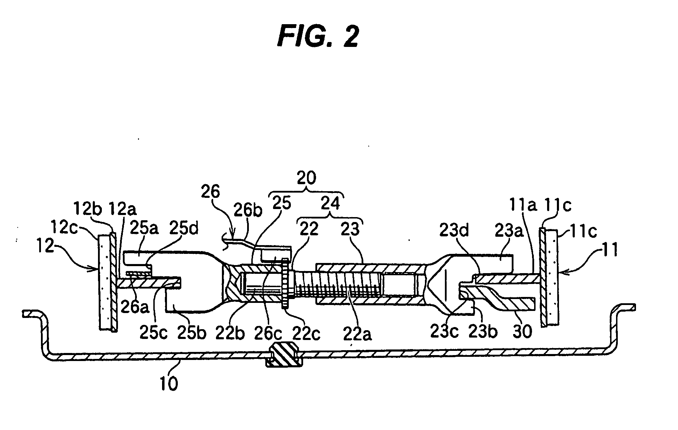

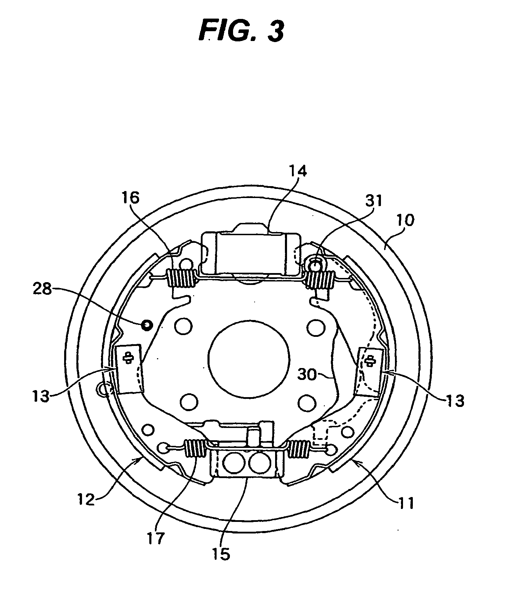

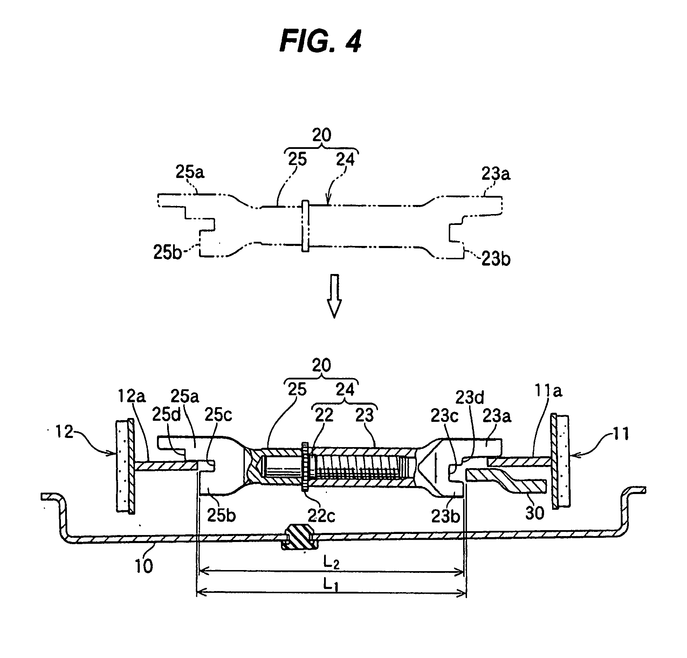

FIG. 1 shows a plan view of a leading-trailing (LT) type drum brake device having a parking brake mechanism and at the same time equipped with the incremental type automatic shoe clearance adjustment apparatus; FIG. 2 shows a cross sectional view of the drum brake device in FIG. 1; FIG. 3 shows a plan view of the drum brake device prior to the installation of the strut assembly that is a component of the automatic shoe clearance adjustment apparatus; and FIG. 4 shows a cross sectional view of the drum brake device prior to the completion of the installation of the strut assembly.

In the drum brake device in FIG. 1, a backing plate 10 is fixed on a stationary part of a vehicle using fixing means such as screwing bolts, and a pair of brake shoes 11 and 12 are slidably supported on the backing plate 10 by publicly known shoe hold apparatuses 13, 13.

The pair of brake shoes 11 and 12, which are formed by fixing shoe rims 11 b, 12b on shoe webs 11 a, 12a, thereby making T-shapes in cross section, and affixing linings 11c, 12c on peripheral surfaces of the shoe rims 11b, 12b, have each of one pair of ends (upper ends of FIG. 1) engaging a piston of a wheel cylinder 14 that functions as a shoe expander for the service brake operation and each of the other pair of ends (lower ends of FIG. 1) being supported by an anchor 15 fixed on the backing plate 10.

The wheel cylinder 14 that functions as a service brake actuator is fixed on the backing plate 10 using fixing means such as bolts and is structured so that pistons therein always move together with facing one ends of the brake shoes 11, 12.

Shoe return springs 16, 17 are extended between the pair of brake shoes 11 and 12 so as to urge the brake shoes 11, 12 toward a diameter reducing direction.

A strut assembly 20 establishing the automatic shoe clearance adjustment apparatus is positioned near the wheel cylinder 14 and bridges between both brake shoes 11 and 12. The drum brake device relating to this invention is structured so that the strut assembly 20 can be installed between the brake shoes 11 and 12 from a surface side of FIG. 1 opposite to the backing plate 10 relative to the brake shoes 11, 12 after positioning the pair of brake shoes 11 and 12 on the backing plate 10 as described later.

A brake lever 30 for the parking brake operation lies on the shoe web 11 a of one brake shoe 11, and a proximal end (upper end of FIG. 1) is pivotally supported at one end of the shoe web 11 a by a lever pin 31. The brake lever 30 that receives a spring force of the shoe return springs 16, 17 restricts the return position as a stopper 30a abutting against the shoe rim 11b. A brake cable (not shown in the figures) is connected to a free end (lower end of FIG. 1) of the brake lever 30.

### <2> Automatic Shoe Clearance Adjustment Apparatus

As shown in FIGS. 1 and 2, the automatic shoe clearance adjustment apparatus has the strut assembly 20 extending between the pair of brake shoes 11 and 12 and a driving member that automatically adjusts the shoe clearance by extending the entire length of the strut assembly 20.

This strut assembly 20 has a screw engagement unit 24, which is a combination of the bolt member 22 with integrally formed adjustment teeth 22c and the tube-shaped nut member 23 into which the bolt member 22 is screwed, and a fitting member 25 relatively-rotatably fitting over the screw-engagement unit 24, where the screw-engagement unit 24 and the fitting member 25 engage the pair of brake shoes 11 and 12 respectively.

The driving member has an approximately V-shaped adjustment lever 26, which is pivotally supported at the shoe web 12a of the other brake shoe 12, and an adjustment spring 27, which urges the adjustment lever 26 in one direction. Components of the automatic shoe clearance adjustment apparatus will be explained in detail in the following paragraphs.

### <3> Strut Assembly

The adjustment teeth 22c with small teeth on the periphery are integrally formed on an intermediate portion of the bolt member 22. A screw axle 22a at the right side of the bolt member 22 engages the nut member 23, and a fitting axle 22b at the left side of the bolt member 22 slidably-rotatably fits into a closed bottom hole of the fitting member 25 at the left side of the bolt member 22.

A first upper jaw section 23a and a first lower jaw section 23b with a shorter projection than the first upper jaw section 23a are positioned on a flat portion of the nut member 23 at the right side thereof. A first notched groove 23c and a first stepped portion 23d are formed between both the first upper and the lower jaw sections 23a and 23b of the nut member 23, where the brake lever 30 fits in the first notched groove 23c and the shoe web 11 a of one brake shoe 11 fits in a space between the first stepped portion 23d and the brake lever 30, thereby disabling the rotation of the nut member 23.

A second upper jaw section 25a and a second lower jaw section 25b with a shorter projection than the second upper jaw section 25a are positioned on a flat portion of the fitting member 25 at the left side thereof. A second notched groove 25c and a second stepped portion 25d are formed between both second upper and lower jaw sections 25a and 25b of the fitting member 25, where the shoe web 12a of the other brake shoe 12 fits in the second notched groove 25c to disable the rotation of the fitting member 25.

The strut assembly 20 is structured such that the adjustment teeth 22c are used to rotate the bolt member 22 to enable the bolt member 22 to screw in and out relative to the nut member 23 for adjusting the entire length of the screw-engagement unit 24.

The drum brake device relating to this invention is such that a distance L₁ in a strut assembly axial direction between the pair of brake shoes 11 and 12, on which the strut assembly 20 is positioned, in order to set the strut assembly 20 from an opposite side of the backing plate 10 relative to the brake shoes 11, 12 after positioning the pair of brake shoes 11 and 12 on the backing plate 10, is designed to be more than a distance L₂ in a strut assembly axial direction between both end portions of the strut assembly 20 engaging the brake shoes 11 and 12 at least when the length of the screw-engagement unit 24 of the strut assembly 20 is shortest (FIG. 4). In other words, when the screw-engagement unit 24 of the strut assembly 20 is contracted in the shortest length, the length of both first lower jaw section 23b and second lower jaw section 25b, which are formed on both ends of the strut assembly 20, are designed to not interfere with an inner end surface of the brake lever 30 and an inner end surface of the shoe web 12a of the other brake shoe 12.

### <4> Driving Member

FIG. 1 shows a plan view of the adjustment lever 26 and the adjustment spring 27 as components of the driving member, and FIG. 2 shows partially omitted adjustment lever 26. The adjustment lever 26 is pivotally supported at a pin 28 rising from the shoe web 12a of the other brake shoe 12 and has two arms 26a and 26b extending from a pivot section with the pin 28 where one arm 26a fits in the second stepped portion 25d of the fitting member 25 while a pawl portion 26c of the other arm 26b makes a ratchet engagement with the adjustment teeth 22c of the bolt member 22, so that one arm 26a is urged in a clockwise direction, as shown in FIG. 1, to abut against the second stepped portion 25d using a spring force of the adjustment spring 27 extending between the other arm 26b and the shoe web 12a.

### <5> Drum Brake Device Assembling Operation

According to the assembling process of the conventional drum brake device, the strut assembly is temporarily set between the pair of brake shoes to form the semi-assembly, and then the semi-assembly is mounted on the backing plate. When compared to the conventional assembly process, this invention provides a different assembling process from the conventional assembling process where the pair of the brake shoes 11 and 12 are mounted on the backing plate 10 and then the strut assembly 20 is installed between the pair of brake shoes 11 and 12. The drum brake device assembling operation will be explained in the following paragraphs.

FIG. 3 is a plan view of the drum brake device prior to the installation of the strut assembly 20 that is a component of the automatic shoe clearance adjustment apparatus, where the brake shoes 11, 12 are mounted on the backing plate 10 while slidably supported by the publicly known shoe hold apparatuses 13, 13. When installing one brake shoe 11, the proximal end of the brake lever 30 for the parking brake operation, which is positioned under the shoe web 11 a, is designed to be pivotally supported by the lever pin 31. Also, when installing the other brake shoe 12, the pin 28 is set to stand on the shoe web 12a of the other brake shoe 12.

The shoe return springs 16, 17 are extended between the pair of brake shoes 11 and 12 to abut one facing (upper) ends of the pair of the brake shoes 11 I and 12 against the pistons of the wheel cylinder 14 respectively, and the other facing (lower) ends thereof are supported by the anchor 15 fixed on the backing plate 10, which complete the installation of the pair of brake shoes 11 and 12.

FIG. 4 shows a cross sectional view of the drum brake device illustrating the installation of the strut assembly 20 between the pair of brake shoes 11 and 12 already mounted on the backing plate 10. The strut assembly 20 prior to the installation as shown in a two-dot chain line of FIG. 4 is positioned to face parallel to the backing plate 10, and the first and second lower jaws 23b and 25b are positioned to face toward the backing plate 10. Under this condition, the strut assembly 20 is parallelly moved from the opposite direction of the backing plate 10 relative to the pair of the brake shoes 11 and 12 toward the backing plate 10. When the strut assembly 20 parallelly moves toward the pair of brake shoes 11 and 12, the first and second lower jaws 23b and 25b formed on the flat surfaces at both ends of the strut assembly 20 pass without interfering the brake lever 30 pivotally supported at the shoe web 11 a of the brake shoe 11 and the shoe web 12a of the brake shoe 12, and the first and second upper jaws 23a and 25a formed on the flat surfaces at both ends of the strut assembly 20 abut against one surfaces of the shoe webs 11 a, 12a of the pair of brake shoes 11 and 12. At this time, the strut assembly 20 is such that the length of the screw-engagement unit 24 is short, and therefore the strut assembly 20 can be installed from the opposite direction of the backing plate 10 relative to the pair of brake shoes 11 and 12 simply by parallelly moving the strut assembly 20.

Following the previous step, while the first and second upper jaws 23a, 25a at both ends of the strut assembly 20 are being set on the shoe webs 11 a, 12a of the pair of brake shoes 11 and 12, the adjustment teeth 22c are rotated to extend the entire length of the strut assembly 20. As extending the length of the strut assembly 20, the brake lever 30 fits in the first notched groove 23c at the right side flat portion to abut against the bottom portion of the first notched groove 23c. Here, the shoe web 11a of one brake shoe 11 freely fits in a space formed between the stepped portion 23d and the brake lever 30 with a gap between the stepped portion 23d and the shoe web 11 a. Also, at the flat portion at the left side of the strut assembly 20, the shoe web 12a of the other brake shoe 12 fits in the second notched groove 25c to abut against the bottom portion of the second notched groove 25c. When the strut assembly 20 extends, both upper jaws 23a and 25a smoothly slide along the shoe webs 11 a, 12a of the pair of brake shoes 11 and 12.

As such, the lower jaws 23b, 25b at both ends of the strut assembly 20 proceed to lay under the back surfaces of the brake lever 30 and the other shoe web 12a, thereby effectively preventing the floating and rotation of the strut assembly 20.

Finally, the adjustment lever 26 and the adjustment spring 27 are assembled to complete the assembly of the drum brake device. Various installing processes for the adjustment lever 26 and the adjustment spring 27 may be used, then the adjustment lever 26 can be rotated clockwise from a general installing position to set on the pin 28 and the adjustment lever 26, while the adjustment spring 27 is temporarily set between the adjustment lever 26 and the she web 12a, can be rotated counterclockwise to complete the installing process.

As described above, the strut assembly 20, while the brake shoes 11, 12 are mounted on the backing plate 10, can be installed later, this invention can vastly reduce the production cost compared to the conventional device.

Since the automatic shoe clearance adjustment operation, where the adjustment lever 26 rotates the teeth 22c to extend the entire length of the strut assembly 20 so as to maintain approximately uniform shoe clearance when the linings 11c, 12c wear, is well known, the explanation thereof will be omitted here.

Second embodiment and modifications of first and embodiments will be explained next, and common elements as described in the first embodiment will have the same reference numbers and the detailed explanation of which will be omitted.

### <Second Embodiment>

### <1> Automatic Shoe Clearance Adjustment Apparatus

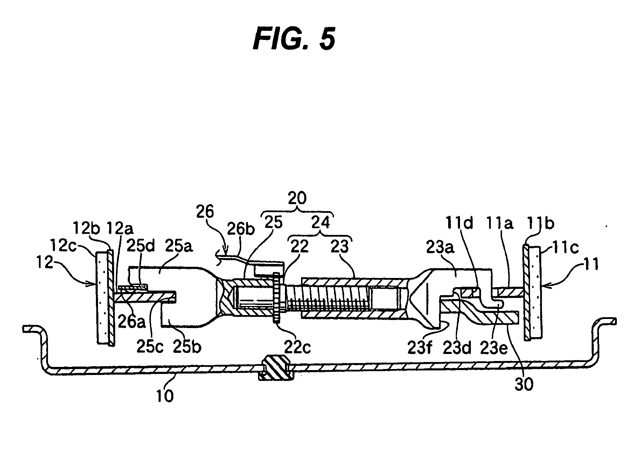

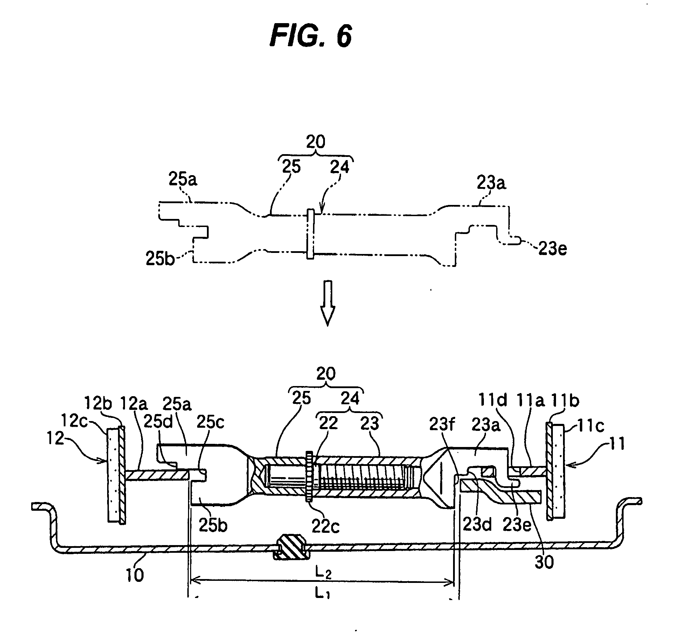

FIGS. 5-7 shows another embodiment where a top of one end of the first upper jaw 23a on the strut assembly 20 is extended to integrally form a hook shaped intermediate jaw 23e, and the intermediate jaw 23e proceeds in a rectangular engagement hole 11 d formed on the shoe web 11 a of one brake shoe 11. FIG. 5 shows a cross sectional view of the leading-trailing (LT) type drum brake device that has the parking brake mechanism as well as the incremental type automatic shoe clearance adjustment apparatus; and FIG. 6 shows a cross sectional view of the drum brake device prior to the completion of the installation of the strut assembly 20.

On the right flat portion of the nut member 23, a first stepped portion 23d is formed at an inner side of the first upper jaw 23a, and a second stepped portion 23f is formed on the proximal end of the first upper jaw 23a. The intermediate jaw 23e is designed such that an extended piece of top of the right nut member 23 is bent in a right angle toward the second stepped portion 23f, and the extended piece is further bent in a right angle parallel to and along the longitudinal direction of the first upper jaw 23a. This example does not have a lower jaw on the right flat portion of the nut member 23, and therefore the intermediate jaw 23e integrally formed from the first upper jaw 23a prevents the floating of the strut assembly 20 just like the lower jaw of the first embodiment. The second stepped portion 23f is a member to be abutted against the brake lever 30, which is the same as the first notched groove 23c of the first embodiment.

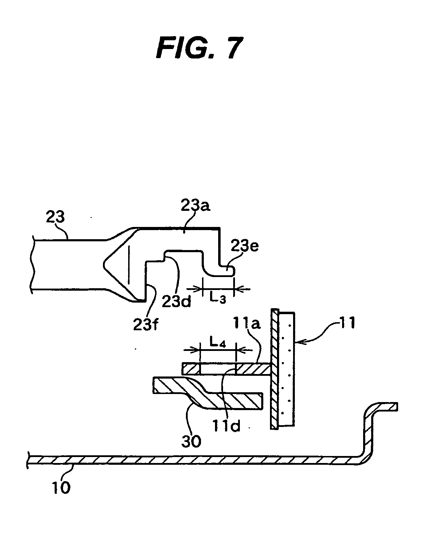

FIG. 7 is a cross sectional view of the drum brake device illustrating the dimensional relationship between the intermediate jaw 23e integrally formed on the first upper jaw 23a of the nut member 23 and the engagement hole 11 d formed on the shoe web 11 a of one brake shoe 11. A length L₃ of the intermediate jaw 23e integrally formed on the first upper jaw 23a is shorter than an opening width L₄ of the rectangular engagement hole 11 d formed on the shoe web 11 a, and when the strut assembly 20, after mounting the pair of the brake shoes 11 and 12 on the backing plate 10, while the strut assembly 20 is positioned parallel to the backing plate 10, is assembled from the opposite direction of the backing plate 10 relative to the pair of brake shoes 11 and 12 toward the backing plate 10, the intermediate jaw 23e is able to pass in the engagement hole 11d of the shoe web 11a. The structures of the left side of the strut assembly 20 and another shoe clearance adjustment apparatus of second embodiment are same as previously explained first embodiment and therefore the explanation of which will be omitted here. In this embodiment, the distance L₁, in the strut assembly axial direction between the pair of brake shoes 11 and 12 for the strut assembly 20 to be extended, is designed more than the distance L₂ in an strut assembly axial direction between both end portions of the strut assembly 20 engaging the brake shoes 11 and 12 at least when the length of the screw-engagement unit 24 of the strut assembly 20 is shortest (FIG. 6).

### <2> Drum Brake Device Assembling Operation

Just like the above-explained first embodiment, the pair of brake shoes 11 and 12 are mounted on the backing plate 10. After completing the installation of the pair of the brake shoes 11 and 12, the strut assembly 20 as shown in a two-dot chain line of FIG. 6 is positioned to face parallel to the backing plate 10, and the strut assembly 20 is installed from the opposite direction of the backing plate 10 relative to the pair of brake shoes 11 and 12 toward the backing plate 10. Upon installing the strut assembly 20, the intermediate jaw 23e of the left flat portion of the strut assembly 20 freely fits in the engagement hole 11 d of the shoe web 11 a, and then the first upper jaw 23a abuts against one surface of the shoe web 11 a of one brake shoe 11. The left flat portion at the left side of the strut assembly 20 abuts against one surface of the shoe web 12a of the other brake shoe 12.

In the next step, while the first and second upper jaws 23a, 25a at both ends of the strut assembly 20 are abutting against the shoe webs 11 a, 12a of the pair of brake shoes 11 and 12, the adjustment teeth 22c are rotated to extend the entire length of the strut assembly 20, as shown in FIG. 5, the second stepped portion 23f at the right flat portion of the strut assembly 20 abuts against the brake lever 30, and at the same time the intermediate jaw 23e freely fitting in the engagement hole 11d of the shoe web 11a approaches the shoe rim 11 b to project at a back surface side of the shoe web 11a disabling the rotation of the nut member 23. At the flat portion at the left side of the strut assembly 20, the shoe web 12a of the other brake shoe 12 fits in the second notched groove 25c to abut against the bottom portion of the second notched groove 25c.

As such, the strut assembly 20, upon completion of the installation, because of the intermediate jaw 23e and the lower jaw 25b at both ends thereof is positioned at the back surface sides of the shoe webs 11 a, 12a, effectively prevents the floating and rotation of the strut assembly 20. This embodiment has another advantage of omitting the lower jaw of the nut member 23 which simplifies the structure of the strut assembly 20.

### <Modification>

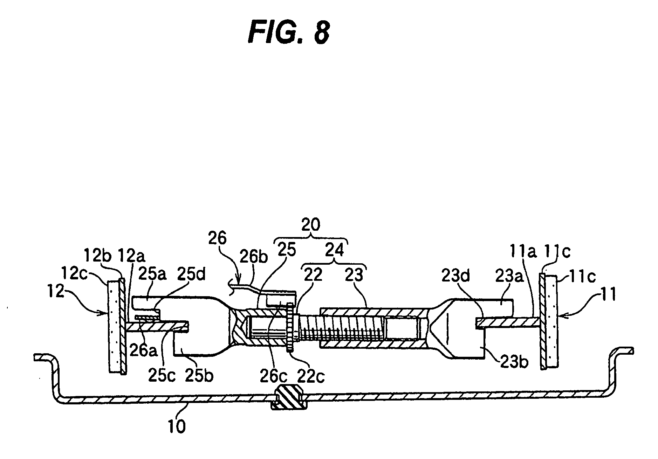

According to FIGS. 8-9, modifications of the first and second embodiments applied in the service brake exclusive drum brake device without the brake lever will be explained in the following paragraphs. To explain the modifications, the left flat portion of the strut assembly 20 is same as the first and second embodiments and therefore the explanation of which will be omitted here. Accordingly, the explanation is focused on the fitting structure of the right flat portion of the strut assembly 20 and one brake shoe 11.

FIG. 8 illustrates a modified example of the first embodiment which shows a cross sectional view of the leading-trailing (LT) type drum brake device. The first upper jaw section 23a and the first lower jaw section 23b with the shorter projection than the first upper jaw section 23a are positioned on the flat portion of the nut section 23 at the left side thereof. The shoe web 11 a of one brake shoe 11 fits in the first notched groove 23c formed between both first upper and lower jaws 23a and 23b to abut against the bottom portion of the first notched groove 23c and to disable the rotation of the nut member 23 at the same time. For the strut assembly 20 as shown in FIG. 8, both first and second lower jaw 23b and 25b is positioned at the back surface sides of the shoe webs 11 a, 12a, which effectively prevents the floating and rotation of the strut assembly 20.

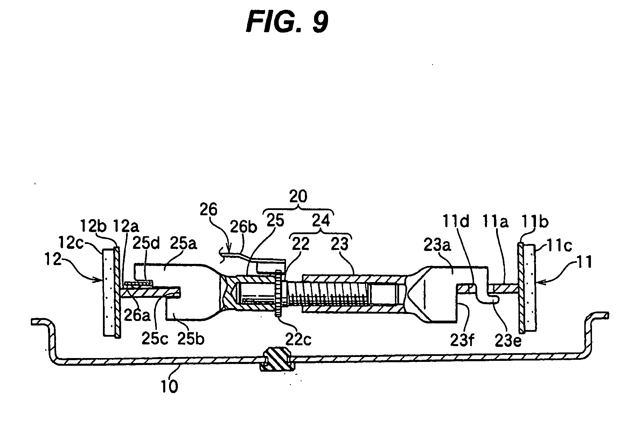

FIG. 9 illustrates a modified example of the second embodiment which shows a cross sectional view of the leading-trailing (LT) type drum brake device. The first upper jaw 23a and the intermediate jaw 23e is integrally extending from the first upper jaw 23a are formed on the left flat portion of the nut member 23, and the stepped portion 23d is formed on the proximal end of the first upper jaw 23a, abutting to engage the shoe web 11a of one brake shoe 11. The rectangular engagement hole 11 d, in which the intermediate jaw 23e can freely be fitting, is formed on the shoe web 11 a of one brake shoe 11. For the strut assembly 20 of this example, the intermediate jaw 23e formed on the left flat portion of the nut member 23 fits in the engagement hole 11 d to is positioned at the back surface side of the shoe web 11 a, and the second lower jaw 25b formed on the left flat portion of the fitting member 25 is positioned at the back surface side of the shoe web 12a, thereby effectively preventing the floating and rotation of the strut assembly 20.

As in the above-explained modifications, the automatic shoe clearance adjustment apparatus according to this invention can be employed in the service brake excusive drum brake device without the brake lever.

### <Third Embodiment>

The first and the second embodiments illustrate the arrangement where the brake lever 30 is superposed on the shoe web 11 a of one brake shoe 11; however, the brake lever 30 can be positioned on the shoe web 12a of the other brake shoe 12. While the embodiments of the present invention disclosed herein are presently considered to be preferred embodiments, various changes and modifications can be made without departing from the scope of the present invention. The scope of the invention is indicated in the appended claims, and all changes that come within the meaning and range of equivalents are intended to be embraced therein.

### <EXPLANATION OF REFERENCE NUMBERS>

10. Backing Plate
11, 12 Brake Shoe
11a, 12a Shoe Web
11b, 12b Shoe Rim
11c, 12c Lining
13 Shoe Hold Apparatus
14 Wheel Cylinder
15 Anchor
16, 17 Shoe Return Spring
20 Strut Assembly
22 Bolt Member
22c Adjustment Teeth (of Bolt Member)
23 Nut Member
23a First Upper Jaw (of Nut Member)
23b First Lower Jaw (of Nut Member)
23c First Notched Groove (of Nut Member)
23d First Stepped Portion(of Nut Member)
23e Intermediate Jaw (of Nut Member)
24 Screw-engagement Unit
25 Fitting Member
25a Second Upper Jaw (of Fitting Member)
25b Second Lower Jaw (of Fitting Member)
25c Second Notched Groove (of Fitting Member)
25d Second Stepped Portion (of Fitting Member)
26 Adjustment Lever
26a One Arm (of Adjustment Lever)
26b The Other Arm (of Adjustment Lever)
26c Pawl Portion (of Adjustment Lever)
27 Adjustment Spring
30 Brake lever

## Claims

1. A drum brake device comprising:
(I) a semi-assembly having:
(A) a backing plate (10),
(B) a pair of brake shoes (11, 12) mounted on the backing plate (10) so as to face each other,
(C) a service brake actuator (14) positioned between one facing ends of the pair of brake shoes (11, 12),
(D) an anchor (15) positioned between the other facing ends of the pair of brake shoes (11, 12), and
(E) a shoe return spring (16, 17) urging the pair of brake shoes in a direction to approach each other so as to maintain both abutments between one facing ends of the brake shoes (11, 12) and the service brake actuator (14) and between the other facing ends of the brake shoes (11, 12) and the anchor (15), and
(II) an automatic shoe clearance adjustment apparatus having:
(A) a strut assembly (20) including;
(1) a screw-engagement unit (24) consisting of a bolt member (22) with the adjustment teeth (22c) formed thereon and a nut member (23) into which the bolt member (22) is screwed, where said screw-engagement unit (24) is positioned adjacent to one of the pair of brake shoes (11, 12); and
(2) a fitting member (25) relatively-rotatably fitting in the screw-engagement unit (24) and said fitting member (25) is positioned adjacent to the other of the pair of brake shoes (11, 12), and
(B) a driving member (26, 27) that engages adjustment teeth (22c) integrally formed on the screw engagement unit (24) of the strut assembly (20) and rotates the adjustment teeth (22c) in one direction to extend the entire length of the strut assembly (20) so as to automatically adjust a clearance between the brake shoes (11, 12) and a brake drum when the amount of brake shoe opening is more than a predetermined value,
**characterized in that** said strut assembly (20) of said automatic shoe clearance adjustment apparatus is mountable between the pair of brake shoes (11, 12) of said semi-assembly when said strut assembly (20) shifts, being parallel to the backing plate (10), in the direction towards the backing plate, and said strut assembly (20) is engageable with the brake shoes (11, 12) when the length of said strut assembly (20) is extended.

2. The drum brake device according to Claim 1, **characterized in that** said strut assembly (20) is engageable with one brake shoe (11) via a brake lever (26) being provided on said one brake shoe (11) and operating by the parking brake.

3. The drum brake device according to Claims 1 or 2, **characterized in that** a distance between a shoe-engagement portions of the pair of brake shoes (11, 12) in an axial direction of the strut assembly (20) is larger than a length from a backing plate side part (23b; 23f) of the screw-engagement unit (24) of the strut assembly (20) to a backing plate side part (25b) of the fitting member of the strut assembly (20) at least when the length of the strut assembly (20) is shortest, where said backing plate side parts (23b; 23f) defines the shoe-engagement portion of the strut assembly (20) at one brake shoe thereof and said backing plate side part (25b) defines the shoe-engagement portion of the strut assembly (20) at a second brake shoe side thereof.

## Patentansprüche

1. Trommelbremsvorrichtung, die Folgendes aufweist:
(I) eine Teilbaugruppe, die Folgendes aufweist:
(A) eine Trägerplatte (10),
(B) ein Paar Bremsbacken (11, 12), die so auf der Trägerplatte (10) montiert sind, dass sie einander zugewandt sind,
(C) einen Betriebsbremsaktuator (14), der zwischen den einen gegenüberliegenden Enden des Bremsbackenpaares (11, 12) angeordnet ist,
(D) einen Anker (15), der zwischen den anderen gegenüberliegenden Enden des Bremsbackenpaares (11, 12) angeordnet ist, und
(E) eine Backenrückholfeder (16, 17), die das Paar Bremsbacken in eine Richtung drängt, in der sie sich derart einander annähern, dass beide Anlagekontakte zwischen den einen gegenüberliegenden Enden der Bremsbacken (11, 12) und dem Betriebsbremsaktuator (14) und zwischen den anderen gegenüberliegenden Enden der Bremsbacken (11, 12) und dem Anker (15) beibehalten bleiben, und
(II) eine Vorrichtung zur automatischen Einstellung des Bremsbackenspiels, die Folgendes aufweist:
(A) eine Spreizanordnung (20), die Folgendes umfasst:
(1) eine Schraubeingriffnahme-Einheit (24), die aus einem Bolzenelement (22), an dem Einstellzähne (22c) ausgebildet sind, und einem Mutternelement (23), in welches das Bolzenelement (22) hineingeschraubt wird, besteht, wobei die Schraubeingriffnahme-Einheit (24) einer der Bremsbacken des Paares (11, 12) benachbart angeordnet ist; und
(2) ein Montageelement (25), das relativ drehbar in die Schraubeingriffnahme-Einheit (24) passt, wobei das Montageelement (25) der anderen der Bremsbacken des Paares (11, 12) benachbart angeordnet ist, und
(B) ein Antriebselement (26, 27), das Einstellzähne (22c) in Eingriff nimmt, die integral an der Schraubeingriffnahme-Einheit (24) der Spreizanordnung (20) ausgebildet sind, und das die Einstellzähne (22c) in eine Richtung dreht, um die Gesamtlänge der Spreizanordnung (20) derart zu vergrößern, dass automatisch ein Abstand zwischen den Bremsbacken (11, 12) und einer Bremstrommel eingestellt wird, wenn das Ausmaß der Bremsbackenöffnung einen vorgegebenen Wert übersteigt,
**dadurch gekennzeichnet, dass** die Spreizanordnung (20) der Vorrichtung zur automatischen Einstellung des Bremsbackenspiels zwischen dem Paar Bremsbacken (11, 12) der Teilbaugruppe montiert werden kann, wenn sich die Spreizanordnung (20), die sich parallel zu der Trägerplatte (10) befindet, in Richtung zu der Trägerplatte verschiebt, und die Spreizanordnung (20) mit den Bremsbacken (11, 12) in Eingriff gebracht werden kann, wenn die Länge der Spreizanordnung (20) vergrößert wird.

2. Trommelbremsvorrichtung nach Anspruch 1, **dadurch gekennzeichnet, dass** die Spreizanordnung (20) mit einer Bremsbacke (11) über einen Bremshebel (26), der an der einen Bremsbacke (11) vorgesehen ist und bei Betätigung der Parkbremse wirksam wird, in Eingriff gebracht werden kann.

3. Trommelbremsvorrichtung nach den Ansprüchen 1 oder 2, **dadurch gekennzeichnet, dass** eine Distanz zwischen Bremsbacken-Eingriffnahmeabschnitten des Bremsbackenpaares (11, 12) in einer axialen Richtung der Spreizanordnung (20) mindestens dann größer als eine Länge von einem trägerplattenseitigen Teil (23b; 23f) der Schraubeingriffnahme-Einheit (24) der Spreizanordnung (20) zu einem trägerplattenseitigen Teil (25b) des Montageelements der Spreizanordnung (20) ist, wenn die Länge der Spreizanordnung (20) am kürzesten ist, wobei der trägerplattenseitige Teil (23b; 23f) den Bremsbacken-Eingriffnahmeabschnitt der Spreizanordnung (20) an einer Bremsbacke definiert und der trägerplattenseitige Teil (25b) den Bremsbacken-Eingriffnahmeabschnitt der Spreizanordnung (20) auf der Seite einer zweiten Bremsbacke derselben definiert.

## Revendications

1. Dispositif de frein à tambour comprenant :
(I) un semi-ensemble comportant :
(A) un plateau de frein (10),
(B) une paire de mâchoires de frein (11, 12) montées sur le plateau de frein (10) de manière à se faire face l'une à l'autre,
(C) un actionneur de frein de service (14) positionné entre des premières extrémités opposées de la paire de mâchoires de frein (11, 12),
(D) une ancre (15) positionnée entre des secondes extrémités opposées de la paire de mâchoires de frein (11, 12), et
(E) un ressort de rappel de mâchoire (16, 17) sollicitant la paire de mâchoires de frein dans une direction pour qu'elles se rapprochent l'une de l'autre de manière à maintenir les deux butées entre les premières extrémités opposées des mâchoires de frein (11, 12) et l'actionneur de frein de service (14) et entre les secondes extrémités opposées des mâchoires de frein (11, 12) et l'ancre (15), et
(II) un dispositif d'ajustement automatique de jeu de mâchoire de frein comportant :
(A) un ensemble entretoise (20) comportant :
(1) une unité de vissage (24) constituée par un élément de boulon (22) avec des dents de réglage (22c) formées sur celui-ci et un élément d'écrou (23) dans lequel l'élément de boulon (22) est vissé, où ladite unité de vissage (24) est positionnée de manière adjacente à l'une de la paire de mâchoires de frein (11, 12) ; et
(2) un élément d'insertion (25) s'insérant de manière à être relativement rotatif dans l'unité de vissage (24), et ledit élément d'insertion (25) est positionné de manière adjacente à l'autre de la paire de mâchoires de frein (11, 12), et
(B) un élément d'entraînement (26,27) qui vient en prise avec les dents de réglage (22c) faisant partie intégrante de l'unité de vissage (24) de l'ensemble entretoise (20) et fait tourner les dents de réglage (22c) dans une direction pour étendre la longueur totale de l'ensemble entretoise (20) de manière à ajuster automatiquement un jeu entre les mâchoires de frein (11, 12) et un tambour de frein lorsque la quantité d'ouverture de mâchoires de frein est supérieure à une valeur prédéterminée,
**caractérisé en ce que** ledit ensemble entretoise (20) dudit dispositif d'ajustement automatique de jeu de mâchoire de frein peut être monté entre la paire de mâchoires de frein (11, 12) dudit semi-ensemble lorsque ledit ensemble entretoise (20), étant placé parallèlement au plateau de frein (10), se déplace dans la direction du plateau de frein, et ledit ensemble entretoise (20) peut être mis en prise avec les mâchoires de frein (11, 12) lorsque la longueur dudit ensemble entretoise (20) est étendue.

2. Dispositif de frein à tambour selon la revendication 1, **caractérisé en ce que** ledit ensemble entretoise (20) peut être mis en prise avec une mâchoire de frein (11) par l'intermédiaire d'un levier frein (26) qui est prévu sur ladite mâchoire de frein (11) et fonctionnant par le frein de stationnement.

3. Dispositif de frein à tambour selon l'une des revendications 1 ou 2, **caractérisé en ce qu'**une distance entre des parties de contact de mâchoire de la paire de mâchoires de frein (11, 12) dans une direction axiale de l'ensemble entretoise (20) est supérieure à une longueur allant d'une partie côté plateau de frein (23b; 23f) de l'unité de vissage (24) de l'ensemble entretoise (20) à une partie côté plateau de frein (25b) de l'élément d'insertion de l'ensemble entretoise (20), au moins lorsque la longueur de l'ensemble entretoise (20) est la plus courte, où ladite partie côté plateau de frein (23b; 23f) définit la partie de contact de mâchoire de l'ensemble entretoise (20) au niveau d'une première mâchoire de frein et ladite partie côté plateau de frein (25b) définit la partie de contact de mâchoire de l'ensemble entretoise (20) au niveau d'un second côté de mâchoire de frein de celui-ci.
